(19) Europäisches Patentamt
European Patent Office
Office européen des brevets

(11) **EP 2 123 617 B1**

(12) **EUROPEAN PATENT SPECIFICATION**

(45) Date of publication and mention
of the grant of the patent:
**21.08.2013 Bulletin 2013/34**

(51) Int Cl.:
***C09J 1/00*** (2006.01)

(21) Application number: **08711011.0**

(86) International application number:
**PCT/JP2008/052132**

(22) Date of filing: **08.02.2008**

(87) International publication number:
**WO 2008/096851 (14.08.2008 Gazette 2008/33)**

(54) **JOINING MATERIAL COMPOSITION, METHOD FOR PRODUCTION OF THE JOINING MATERIAL COMPOSITION, JOINTED ARTICLE, AND METHOD FOR PRODUCTION OF THE JOINTED ARTICLE**

VERBINDUNGSMATERIALZUSAMMENSETZUNG, VERFAHREN ZUR HERSTELLUNG DER VERBINDUNGSMATERIALZUSAMMENSETZUNG, VERBUNDENER GEGENSTAND UND VERFAHREN ZUR HERSTELLUNG DES VERBUNDENEN GEGENSTANDS

COMPOSITION DE MATIÈRE DE LIAISON, PROCÉDÉ DE FABRICATION DE LA COMPOSITION DE MATIÈRE DE LIAISON, ARTICLE ASSEMBLÉ ET PROCÉDÉ DE FABRICATION DE L'ARTICLE ASSEMBLÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.02.2007 JP 2007029493**

(43) Date of publication of application:
**25.11.2009 Bulletin 2009/48**

(73) Proprietor: **NGK Insulators, Ltd.**
**Nagoya-shi, Aichi 467-8530 (JP)**

(72) Inventors:
• **KODAMA, Suguru**
**Nagoya-shi**
**Aichi 467-8530 (JP)**

• **INOUE, Katsuhiro**
**Nagoya-shi**
**Aichi 467-8530 (JP)**
• **TOMITA, Takahiro**
**Nagoya-shi**
**Aichi 467-8530 (JP)**

(74) Representative: **Paget, Hugh Charles Edward**
**Mewburn Ellis LLP**
**33 Gutter Lane**
**London**
**EC2V 8AS (GB)**

(56) References cited:
**WO-A1-03/086579          WO-A1-2005/089901**
**WO-A1-2005/105705    JP-A- 61 026 572**
**JP-A- 2005 154 202      JP-A- 2008 007 683**
**US-A1- 2004 097 370**

**Description**

Technical Field

The present invention relates to a bonding material composition for use in integrally bonding a plurality of objects to be bonded such as honeycomb segments constituting a honeycomb structure, a bonded article integrally bonded by the bonding material composition, a manufacturing method of a bonding material composition and a manufacturing method of a bonded article using the bonding material composition.

Background Art

A honeycomb structure is broadly used as a collection filter for an exhaust gas, for example, a diesel particulate filter (DPF) for collecting and removing a particulate material (particulates) included in an exhaust gas from a diesel engine or the like.

Such a honeycomb structure has a structure in which a plurality of cells as through channels for a fluid partitioned and formed by porous partition walls made of, for example, silicon carbide (SiC) are arranged in parallel with one another in a central axis direction. Moreover, the ends of the adjacent cells are alternately plugged (in a checkered pattern). That is, one cell has one end thereof being opened, and the other end thereof being plugged. Another cell adjacent to this cell has one end thereof being plugged, and the other end thereof being opened.

In such a structure, the exhaust gas caused to flow into predetermined cells (the inflow cells) from one end of the structure is passed through the porous partition walls and discharged through cells (the outflow cells) adjacent to the inflow cells, and the particulate material (the particulates) included in the exhaust gas is collected by the partition walls when the exhaust gas is passed through the partition walls, whereby the exhaust gas can be purified.

To use such a honeycomb structure (the filter) continuously for a long time, the filter needs to be periodically subjected to a regeneration treatment. That is, to decrease a pressure loss increased by the particulates deposited in the filter with an elapse of time and to bring a filter performance back into an initial state, the particulates deposited in the filter need to be burnt and removed. There have been problems that a large heat stress is generated during the regeneration of this filter and that this heat stress causes crack, breakdown or the like in the honeycomb structure. To meet a demand for the improvement of a thermal shock resistance with respect to this heat stress, there is suggested a honeycomb structure having a divided structure in which a plurality of honeycomb segments are integrally bonded by bonding material layers and provided with a function of scattering and alleviating the heat stress, whereby the thermal shock resistance of the structure can be improved to a certain degree.

However, in recent years, a demand for the enlargement of the filter has further risen, and accordingly the heat stress generated during regeneration increases. To solve the above problem, further improvement of the thermal shock resistance of the structure is strongly demanded. To realize this improvement of the thermal shock resistance, the bonding material layers for integrally bonding the plurality of honeycomb segments require an excellent stress alleviating function and bonding strength.

Heretofore, a ceramic structure has been disclosed in which for a purpose of the improvement of the thermal shock resistance by the improvement of such bonding material layers, a plurality of honeycomb segments are integrally bonded by use of a sealing agent made of at least an inorganic fiber, an organic binder, an inorganic binder and inorganic particles and having an inorganic fiber orientation degree of 70% or more (see Patent Document 1). Moreover, a honeycomb structure is disclosed in which similarly for the purpose of the improvement of the thermal shock resistance, the Young's modulus of the material of the bonding layer between the honeycomb segments is set to 20% or less of that of the material of the honeycomb segments (see Patent Document 2).

In the ceramic structure disclosed in Patent Document 1, since the above sealing agent (the bonding material composition) is used, it is possible to obtain an effect that expansion and contraction of the filter (the ceramic structure) in a longitudinal direction are suppressed, and the heat stress applied to the filter can be released even on severe use conditions. However, when the oriented inorganic fiber (the fiber) is included in the bonding material composition as described above, the compressive Young's modulus in the thickness direction of the bonding material layer decreases, but tensile Young's modulus increases, whereby a high heat stress is generated. Moreover, when the fiber is oriented in one direction of the bonding material composition to join the objects to be bonded, the contraction of the bonding material composition during drying or a heat treatment varies in a fiber orientating direction and a direction vertical to the orienting direction, thereby easily generating defects such as crack and void.

Furthermore, the sealing agent disclosed in Patent Document 1 is a ceramic cement material, and it is essential to control the characteristics of the agent in accordance with the diameter or length of the fiber as a filler, whereby there is a problem of high cost. In addition, since this sealing agent uses the fiber as the filler of the ceramic cement material, it cannot be considered that the agent is harmless for a human body.

Moreover, in the honeycomb structure disclosed in Patent Document 2, the Young's modulus of the bonding material layer is decreased to decrease the heat stress generated during use. However, when the porosity of the bonding material layer is increased to decrease the Young's modulus, the bonding strength between the honeycomb segments becomes insufficient, and a sound bonded article cannot be obtained on occasion.

Patent Document 1: JP-A-2002-177719

Patent Document 2: JP-A-2001-190916

US 2004/0097370 describes a honeycomb structure formed by bonding into one piece, via a bonding layer, a plurality of honeycomb segments, the honeycomb segment having an outer wall, partition walls provided inside the outer wall, and a large number of through-holes divided by the partition walls and extending in the axial direction of the segment. In the honeycomb structure, the outer wall and the bonding layer having a relation of:

$$d/[(\kappa a/da)+(\kappa C/dc)] \geqq \kappa \geqq d/[(\kappa a/da)+(\kappa C/dc)] \times 0.6$$

wherein $\kappa C$ (W/mK) and dc (cm) are respectively the thermal conductivity and thickness of the outer wall, $\kappa a$ (W/mK) and da (cm) are respectively the thermal conductivity and thickness of the bonding layer formed on the outer wall, and $\kappa$ (W/mK) and d (cm) are respectively the thermal conductivity and thickness of a layer which is the sum of the outer wall and the bonding layer.

US 2004/0097370 describes production of adhesives. Water and dimethylformamide were used as a liquid component according to a composition shown below. Clay as an inorganic binder was mixed into an aluminosilicate-based fiber having an average particle diameter of 100 $\mu$m, particulate silicon carbide having an average particle diameter of 10 $\mu$m, zirconium silicate and a 40 mass% aqueous silica sol solution. Thereto was added water of an amount shown below. Kneading was conducted for 30 minutes using a mixer to obtain adhesives A and B. The surface tensions of liquid components were measured by a capillary method.

| Adhesive | Aluminosilicate fiber (mass %) | Silicon carbide (mass %) | Silica sol (mass %) | Clay (mass %) | Water (mass %) | Dimethylformamide (mass %) | Surface tension of liquid component (dyn/cm) | Thermal conductivity (W/mK) | Density (g/cm$^3$) |
|---|---|---|---|---|---|---|---|---|---|
| A | 32 | 37 | 20 | 1 | 8 | 2 | 60 | 0.3 | 1 |
| B | 32 | 37 | 20 | 1 | 10 | - | 72 | 0.9 | 1.7 |

Disclosure of the Invention

The present invention has been developed in view of the above problems of a conventional technology, and a main object thereof is to provide a bonding material composition which can alleviate a heat stress generated in a bonded article, decrease the generation of defects such as crack and void during drying or a heat treatment, and further obtain a sufficient bonding strength, without using any fiber that is at high cost and that cannot be considered to be harmless for a human body.

To achieve the above object, according to the present invention, a bonding material composition, a bonded article, a manufacturing method of the bonding material composition, and a manufacturing method of the bonded article are provided as follows.

[1] A bonding material composition to obtain a bonded article in which two or more objects to be bonded are integrally bonded via bonding material layers, the bonding material composition comprising plate-like particles, non-plate-like particles and an inorganic adhesive as main components, wherein the non-plate-like particles are constituted of non-plate-like particles A having an average particle diameter of 10 $\mu$m or more and non-plate-like particles B having an average particle diameter of less than 10 $\mu$m, and a ratio of the non-plate-like particles B is 10 to 35 mass% of the total main components;
wherein a ratio of the plate-like particles is 5 to 35 mass% of the total main components.

[2] The bonding material composition according to [1], wherein a total ratio of the plate-like particles and the non-plate-like particles A is 40 to 65 mass% of the total main components.

[3] The bonding material composition according to [1] or [2], wherein the plate-like particles have an aspect ratio of 3 or more.

[4] The bonding material composition according to any one of [1] to [3], wherein the plate-like particles have an average particle diameter of 2 to 200 $\mu$m.

[5] The bonding material composition according to any one of [1] to [4], wherein the plate-like particles are plate-like particles made of one or more materials selected from the group consisting of mica, talc, boron nitride and glass flakes.

[6] The bonding material composition according to any one of [1] to [5], wherein the non-plate-like particles are non-plate-like particles made of one or more materials selected from the group consisting of alumina, silica, mullite, zirconia, silicon carbide, silicon nitride, aluminum nitride, boron nitride and glass.

[7] The bonding material composition according to any one of [1] to [6], wherein the objects to be bonded are honeycomb segments (2).

[8] A bonded article in which two or more objects to be bonded are integrally bonded via bonding material layers (9) formed of the bonding material composition according to any one of [1] to [7], wherein the bonding material layers (9) have a porosity of 40 to 80%, and the bonding material layers (9) have an average pore diameter of 20 to 200 $\mu$m.

[9] The bonded article according to [8], wherein the volume ratio of pores having pore diameters of 20 to 200 $\mu$m in all the pores of the bonding material layers is in a range of 30 vol% or more.

[10] The bonded article according to [8] or [9], wherein when a object to be bonded A and an object to be bonded B are bonded via the bonding material layer (9) having a thickness t, the bonding material layer (9) includes a bonding material layer I of a portion having a thickness of 0.25t from an interface between the object to be bonded A and the bonding material layer, a bonding material layer III of a portion having a thickness of 0.25t from an interface between the object to be bonded B and the bonding material layer and a bonding material layer II of a portion having a thickness of 0.5t between the bonding material layer I and the bonding material layer III, and an average porosity $\varepsilon_1$ of the bonding material layers I and III and a porosity $\varepsilon_2$ of the bonding material layer II satisfy a relational formula of $0.8 < \varepsilon_2/\varepsilon_1 < 1.2$.

[11] The bonded article according to any one of [8] to [10], wherein the compressive Young's modulus in the thickness direction of the bonding material layer (9) is 20% or less of the Young's modulus of the object to be bonded (11).

[12]. The bonded article according to any one of [8] to [11], wherein when two objects to be bonded and the bonding material layer (9) which joins the objects to be bonded are cut out as a test piece (13) and subjected to a bonding bend test, bend Young's modulus in the bonding bend test and the compressive Young's modulus in the thickness direction of the bonding material layer have a ratio of 0.8 to 20.

[13]. A manufacturing method of a bonding material composition, comprising the steps of mixing and kneading, into a paste-like state, a material containing plate-like particles, non-plate-like particles A having an average particle diameter of 10 $\mu$m or more, non-plate-like particles B having an average particle diameter of less than 10 $\mu$m and an inorganic adhesive as main components, wherein a ratio of the non-plate-like particles B is 10 to 35 mass% of the total main components;
and wherein a ratio of the plate-like particles is 5 to 35 mass% of the total main components.

[14] A manufacturing method of a bonded article, comprising the steps of integrally bonding two or more objects to be bonded by use of the bonding material composition according to any one of [1] to [7].

The bonding material composition of the present invention does not use any fiber that requires high cost and that cannot be considered to be harmless for a human body, whereby the composition can inexpensively be provided and health problems might not occur. Moreover, since the plate-like particles are used instead of the fiber as a filler, the compressive Young's modulus and tensile Young's modulus in the thickness direction of the bonding material layer can be decreased, and a heat stress generated in the bonded article can be alleviated. Furthermore, when the plate-like particles having a high aspect ratio are used instead of the fiber, the directionality of contraction during drying or a heat treatment can be alleviated, whereby the whole bonding material composition can uniformly be contracted, and the generation of defects such as crack and void can be decreased. Moreover, when the plate-like particles and the non-plate-like particles having the predetermined average particle diameter are used together as the filler as described above, pores having appropriate sizes can easily uniformly be formed in the whole bonding material layer. Even when the porosity is not excessively increased, the Young's modulus of the bonding material layer can be decreased, whereby a sufficient bonding strength can be secured while alleviating the heat stress generated in the bonded article. The bonded article of the present invention is obtained by bonding a plurality of objects to be bonded by the bonding material composition having an excellent effect as described above, and from the viewpoint of the alleviation of the heat stress, the porosity and average pore diameter of the bonding material layer are controlled in predetermined ranges. Therefore, the bonded article has an excellent thermal resistance, and can preferably be used as, for example, a honeycomb structure for a DPF. According to the manufacturing method of the bonding material composition of the present invention, the bonding material composition having the excellent effect as described above can be manufactured. According to the manufacturing method of the bonded article of the present invention, the bonded article having an excellent thermal resistance can be manufactured.

Brief Description of the Drawings

Fig. 1 is a schematic perspective view showing one example of an embodiment of a bonded article (a honeycomb structure) according to the present invention;
Fig. 2 is an enlarged view of a main part showing the example of the embodiment of the bonded article (the honeycomb structure) according to the present invention;
Fig. 3 is a schematic perspective view of a object to be bonded (a honeycomb segment) constituting the bonded article (the honeycomb structure) according to the present invention;
Fig. 4 is a sectional view cut along the A-A line of Fig. 3;
Fig. 5 is a perspective view showing one example of a test piece cut from the bonded article; and
Fig. 6 is a perspective view showing a method of a four-point bend test.

Description of Reference Numerals

1: honeycomb structure, 2: honeycomb segment, 4: coating material, 5: cell, 6: partition wall, 7: filling material, 9: bonding material layer, 11: object to be bonded, 13: test piece, 15: support point, and 17: load point.

Best Mode for Carrying out the Invention

Hereinafter, the present invention will be described in accordance with a specific embodiment, but the present invention is not limited to this embodiment when interpreted, and the present invention can variously be altered, modified or improved based on the knowledge of a person with ordinary skill without departing from the scope of the present invention.

A bonding material composition according to the present invention is a bonding material composition for obtaining a bonded article in which two or more objects to be bonded are integrally bonded via bonding material layers, and the bonding material composition contain plate-like particles, non-plate-like particles and an inorganic adhesive as main components. It is to be noted that here "the plate-like particles, the non-plate-like particles and the inorganic adhesive are contained as the main components" means that the total amount of the plate-like particles, the non-plate-like particles and the inorganic adhesive is 50 mass% or more of the whole bonding material composition. Moreover, "the plate-like particles" are particles **characterized in that** each particle has two or more comparatively flat faces, two of the flat faces are substantially parallel to each other, and a distance between the substantially parallel faces is smaller than the major diameter of each face. Moreover, "the non-plate-like particles" are lump-like or spherical particles which do not have the above characteristics of the plate-like particles and which do not have characteristics regarded as those of fibrous or needle-like particles.

One of the important characteristics of the present invention lies in that the plate-like particles are used instead of an inorganic fiber (the fiber) heretofore used as a filler of the bonding material composition. First, in a case where the bonding material composition of the present invention is considered from a functional viewpoint, when the plate-like particles are used instead of the fiber, bend Young's modulus in the bonding bend test of the bonded article can be decreased. This indicates that tensile Young's modulus in the thickness direction of the bonding material layer is small, so that a heat stress generated in the bonded article can be alleviated. Moreover, in a case where the plate-like particles are used, even when the porosity of the bonding material layer is not excessively increased, the Young's modulus of the bonding material layer can be decreased as described above, whereby a sufficient bonding strength can be secured while alleviating the heat stress generated in the bonded article. Furthermore, when the plate-like particles having a high aspect ratio are used instead of the fiber oriented in one direction, the directionality of contraction during drying or a heat treatment is alleviated, whereby the whole bonding material composition can uniformly be contracted, and the generation of defects such as crack and void can be decreased.

Next, the bonding material composition of the present invention is considered from a cost aspect. In the bonding material composition using the fiber, the diameter and length of the fiber need to be controlled in order to control the characteristics of the composition, and much cost is required for the control. On the other hand, when the plate-like particles are used, the control which requires such high cost is not necessary, and hence the composition can inexpensively be provided. Furthermore, even in a case where the composition is considered from safety with respect to a human body, when the fiber is taken into the body by breathing or the like, it cannot necessarily be considered that the composition is harmless. However, when the plate-like particles are used, health problems might hardly occur.

As to the ratio of the plate-like particles included in the bonding material composition of the present invention from the viewpoint of the control of compressive Young's modulus and tensile Young's modulus in the thickness direction of the bonding material layer and the alleviation of the directionality of the contraction during drying or a heat treatment, the ratio is 5 to 35 mass%, more preferably 8 to 32 mass%, further preferably 10 to 30 mass% of the total main components (the plate-like particles, the non-plate-like particles and the inorganic adhesive). When the ratio of the plate-like particles is less than 5 mass% of the total main components, the compressive Young's modulus and tensile Young's modulus in the thickness direction of the bonding material layer excessively increase sometimes. Moreover, when the ratio exceeds 35 mass%, the directionality of the contraction during the drying or the heat treatment cannot be alleviated sometimes.

As to the aspect ratio of the plate-like particles from the viewpoints of the control of the compressive Young's modulus and tensile Young's modulus in the thickness direction of the bonding material layer and the alleviation of the directionality of the contraction during the drying or the heat treatment, the aspect ratio is preferably 3 or more, more preferably 5 or more, further preferably 10 or more. When the aspect ratio of the plate-like particles is less than 3, the compressive Young's modulus and tensile Young's modulus in the thickness direction of the bonding material layer excessively increase sometimes.

As to the average particle diameter of the plate-like particles from the viewpoints of the control of the compressive Young's modulus and tensile Young's modulus in the thickness direction of the bonding material layer and the alleviation of the directionality of the contraction during the drying or the heat treatment, the average particle diameter is preferably 2 to 200 $\mu$m, more preferably 5 to 180 $\mu$m, further preferably 10 to 150 $\mu$m. When the average particle diameter of the plate-like particles is less than 2 $\mu$m, the compressive Young's modulus and tensile Young's modulus in the thickness direction of the bonding material layer excessively increase sometimes. Moreover, when the average particle diameter exceeds 200 $\mu$m, the directionality of the contraction during the drying or the heat treatment cannot be alleviated sometimes. It is to be noted that "the average particle diameter" mentioned in the present description is a value measured in conformity to JIS R1629 in the case of the plate-like particles, non-plate-like particles A or non-plate-like particles B.

Specific examples of the material of the plate-like particles include mica, talc, boron nitride and glass flakes, and mica may especially preferably be used. Moreover, as to mica and talc, when a hydroxyl group is removed from the structure in advance, the thermal stability of the resultant bonding material layer improves. Therefore, calcinated mica or calcinated talc is preferably used. It is to be noted that the calcinating temperature of mica is preferably 800°C or more, and that of talc is preferably 900°C or more.

Moreover, the bonding material composition of the present invention includes non-plate-like particles as a filler other than the plate-like particles. The non-plate-like particles are constituted of the non-plate-like particles A having an average particle diameter of 10 μm or more and the non-plate-like particles B having an average particle diameter of less than 10 μm, and a ratio of the non-plate-like particles B is 10 to 35 mass%, preferably 15 to 30 mass%, more preferably 18 to 28 mass% of the total main components. To decrease the Young's modulus of the bonding material layer, not only the increase of the porosity but also the formation of pores having sizes and distribution state being controlled are effective. When such non-plate-like particles are used together with the plate-like particles as the bonding material composition, the pores having appropriate sizes are easily uniformly formed in the whole bonding material layer.

The particle sizes and content of the non-plate-like particles are important elements for controlling the sizes and distribution state of the pores. In a case where the non-plate-like particles A, B having different average particle diameters as described above are mixed and used and the ratio of the non-plate-like particles B is set to the above range, a homogeneous texture is obtained in which the pores having appropriate sizes are uniformly formed, so that the compressive Young's modulus decreases. Moreover, the deformation of the whole bonding material layer due to heat is also homogenized owing to the homogeneity of the texture, and a high heat stress is not easily generated locally. It is to be noted that the non-plate-like particles B have a function of filling gaps between the plate-like particles and the non-plate-like particles A to combine the particles. Therefore, when the ratio of the non-plate-like particles B is less than 10 mass% of the total main components, a sufficient bonding strength cannot be obtained. On the other hand, when the ratio exceeds 35 mass%, the texture of a combined portion is densified, and the compressive Young's modulus and tensile Young's modulus in the thickness direction of the bonding material layer excessively increase sometimes.

From the viewpoints of the control of the sizes and distribution state of the pores, the average particle diameter of the non-plate-like particles A needs to be 10 μm or more, preferably 50 to 150 μm, further preferably 80 to 120 μm. Moreover, the average particle diameter of the non-plate-like particles B needs to be less than 10 μm, preferably 0.1 to 5 μm, further preferably 0.5 to 2.5 μm. When these average particle diameters are outside the above ranges, the sizes and distribution state of the pores become heterogeneous, and the high heat stress is unfavorably generated locally.

Specific examples of the material of the non-plate-like particles include alumina, silica, mullite, zirconia, silicon carbide, silicon nitride, aluminum nitride, boron nitride and glass.

From the viewpoint of the control of the sizes and distribution state of the pores in the bonding material composition of the present invention, the total ratio of the plate-like particles and non-plate-like particles A included in the bonding material composition is preferably 40 to 65 mass%, more preferably 42 to 63 mass%, further preferably 45 to 60 mass% of the total main components. When this ratio is less than 40 mass% of the total main components, the sizes and distribution of the pores become non-uniform, and the compressive Young's modulus and tensile Young's modulus in the thickness direction of the bonding material layer excessively increase sometimes. When the ratio exceeds 65 mass%, the gaps among the particles increase, and the combined portions decrease, whereby a sufficient bonding strength cannot be obtained sometimes.

As to the ratio of the inorganic adhesive included as matrix in the bonding material composition of the present invention from the viewpoints of the control of the compressive Young's modulus and tensile Young's modulus in the thickness direction of the bonding material layer and the bonding strength, the ratio is preferably 16 to 32 mass%, more preferably 18 to 30 mass%, further preferably 20 to 28 mass% of the total main components. When the ratio of the inorganic adhesive is less than 16 mass% of the total main components, the sufficient bonding strength cannot be obtained sometimes. Moreover, when the ratio exceeds 32 mass%, the compressive Young's modulus and tensile Young's modulus in the thickness direction of the bonding material layer excessively increase sometimes.

Specific examples of the material of the inorganic adhesive include colloidal silica (silica sol), colloidal alumina (alumina sol), another metal oxide sol, ethyl silicate, liquid glass, silica polymer, and aluminum phosphate, but colloidal silica is especially preferably used because this material is excellent in bonding force, affinity for the filler, chemical stability, thermal resistance and the like.

The bonding material composition of the present invention may contain sub-components such as an organic binder, a dispersant, a resin balloon and water in addition to the main components, if necessary. It is to be noted that when the resin balloon (e.g., an acrylonitrile plastic balloon) is included as the sub-component, from the viewpoint of the control of the sizes and distribution state of the pores, the ratio of the resin balloon is preferably 0.1 to 5.0 mass%, more preferably 0.2 to 3.5 mass%, further preferably 0.3 to 2.0 mass% of the total main components by superaddition. When this ratio is less than 0.1 mass%, the control of the sizes and distribution state of the pores cannot obtain a sufficient effect on occasion. Moreover, when the ratio exceeds 5.0 mass%, the ratio of the pores excessively increases, and the sufficient bonding strength cannot be obtained on occasion.

In a manufacturing method of the bonding material composition of the present invention, the organic binder (e.g., methyl cellulose (MC) or carboxymethyl cellulose (CMC)), the resin balloon, the dispersant, the water and the like are added to a material containing, as the main components, the plate-like particles, the non-plate-like particles A having an average particle diameter of 10 $\mu$m or more, the non-plate-like particles B having an average particle diameter of less than 10 $\mu$m and the inorganic adhesive, if necessary. A ratio of the non-plate-like particles B is 10 to 35 mass% of the total main components. The components are mixed and kneaded into a paste-like state by use of a kneader such as a mixer.

There is not any special restriction on an object to be bonded, that is, a target member of the bonding by the bonding material composition according to the present invention. However, the composition is suitable in, for example, the bonding of ceramic members for obtaining a ceramic structure, especially the bonding of honeycomb segments for obtaining a honeycomb structure, and the composition is most suitable in the bonding of the honeycomb segments for obtaining the honeycomb structure for use in a diesel exhaust gas purifying filter which is exposed to severe heat environment during the regeneration treatment of the filter.

A bonded article according to the present invention is a bonded article in which two or more objects to be bonded are integrally bonded via bonding material layers formed of the bonding material composition of the present invention. The bonding material layers have a porosity of 40 to 80%, preferably 42 to 75%, further preferably 45 to 70%, and the bonding material layers have an average pore diameter of 20 to 200 $\mu$m, preferably 50 to 180 $\mu$m, further preferably 80 to 160 $\mu$m.

For a purpose of the alleviation of the heat stress of the bonded article, it is important to decrease Young's modulus in the thickness direction of the bonding material layer, but this depends on the fine structure of the bonding material layer, especially the porosity or pore diameters of the bonding material layer. When the bonding material layer has a porosity of 40 to 80% and an average pore diameter of 20 to 200 $\mu$m, the Young's modulus in the thickness direction of the bonding material layer decreases, and the heat stress is effectively alleviated. It is to be noted that when the porosity of the bonding material layer is less than 40%, the Young's modulus in the thickness direction of the bonding material layer increases. Moreover, when the porosity exceeds 80%, the sufficient bonding strength cannot be obtained on occasion. Moreover, when the average pore diameter of the bonding material layer is less than 20 $\mu$m, the pores are not easily deformed, and hence the compressive Young's modulus in the thickness direction of the bonding material layer increases. Moreover, when the diameter exceeds 200 $\mu$m, the sufficient bonding strength cannot be obtained on occasion.

In the bonded article of the present invention from the viewpoint of the suppression of the generation of the locally high heat stress by homogeneous pores, the volume ratio of pores having pore diameters of 20 to 200 $\mu$m in all the pores of the bonding material layer is preferably 30 vol% or more, more preferably 35 vol% or more, further preferably 40 vol% or more. When this ratio is less than 30 vol%, the fluctuations of the pore diameters are large, and hence the whole bonding material layer cannot easily uniformly be deformed, whereby the locally high heat stress is unfavorably generated on occasion.

As to the bonded article of the present invention, in a case where an object to be bonded A and an object to be bonded B are bonded via the bonding material layer having a thickness t, the bonding material layer includes a bonding material layer I of a portion having a thickness of 0.25t from an interface between the object to be bonded A and the bonding material layer, a bonding material layer III of a portion having a thickness of 0.25t from an interface between the object to be bonded B and the bonding material layer and a bonding material layer II of a portion having a thickness of 0.5t between the bonding material layer I and the bonding material layer III, and an average porosity $\varepsilon_1$ of the bonding material layers I and III and a porosity $\varepsilon_2$ of the bonding material layer II preferably satisfy a relational formula of $0.8 < \varepsilon_2/\varepsilon_1 < 1.2$, more preferably satisfy a relational formula of $0.85 < \varepsilon_2/\varepsilon_1 < 1.15$, further preferably satisfy a relational formula of $0.9 < \varepsilon_2/\varepsilon_1 < 1.1$.

This means that the pores are substantially evenly present in the whole bonding material layer. When such a pore distribution state is obtained, the Young's modulus in the thickness direction of the bonding material layer further decreases, and the heat stress alleviating function of the bonded article improves.

It is to be noted that such a pore distribution state is obtained without performing any special operation, when the blend ratio of the constituent materials of the bonding material composition is set to the above preferable range and the bonding is performed by using a usual bonding method or drying method. However, the above pore distribution state can intentionally be obtained by using a technique in which particles removable by means such as burning removal through a heat treatment or extrusion removal through a solvent are included in the bonding material composition in advance, and removed by the above means after the bonding, after drying or after the heat treatment.

In the bonded article of the present invention, the compressive Young's modulus in the thickness direction of the bonding material layer is preferably 20% or less, more preferably 15% or less, further preferably 10% or less of the Young's modulus of the object to be bonded. When the Young's modulus exceeds 20%, the heat stress during actual use cannot be alleviated, and hence crack is easily generated in a product.

It is to be noted that "the compressive Young's modulus in the thickness direction of the bonding material layer" mentioned herein is a value obtained by cutting the portion of the bonding material layer having a predetermined shape from the bonded article (e.g., a 10×10×1 mm plate-like shape) and measuring the displacement of the cut test piece loaded with a predetermined compressive load. The value is calculated from a stress-strain diagram. Moreover, "the Young's modulus of the object to be bonded" is a value calculated from a load-displacement curve in a three-point bend test conforming to JIS R1601.

Moreover, in the bonded article of the present invention, when two objects to be bonded and the bonding material layer which joins the objects to be bonded are cut as a test piece and subjected to a bonding bend test, bend Young's modulus in the bonding bend test and the compressive Young's modulus in the thickness direction of the bonding material layer have a ratio (the bend Young's modulus/the compressive Young's modulus) of preferably 0.8 to 20, more preferably 0.9 to 18, further preferably 1 to 16. When the ratio is less than 0.8, the heat stress during the actual use cannot be alleviated, and the crack is easily generated in the product. When the ratio exceeds 20, the sufficient bonding strength cannot be obtained on occasion.

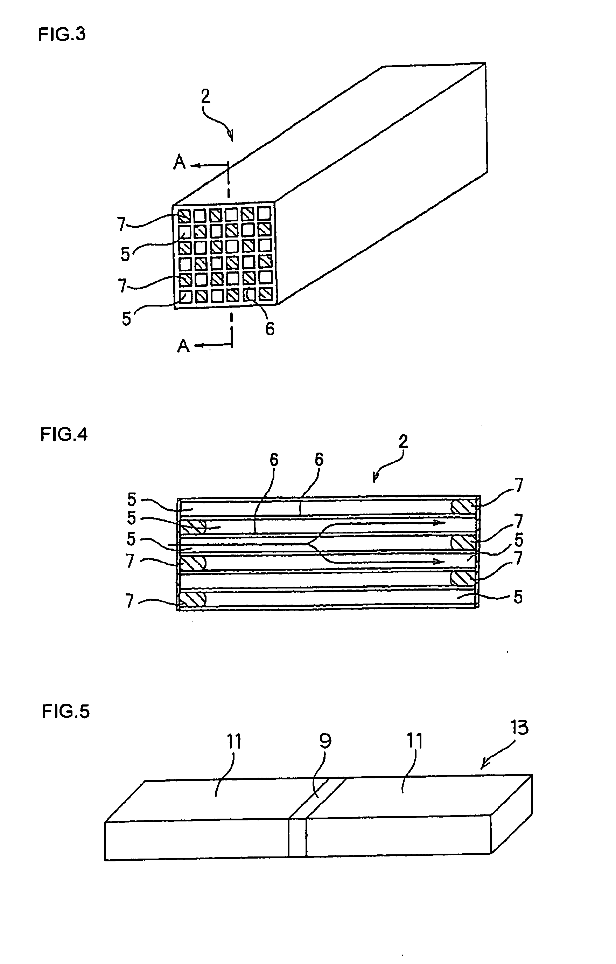

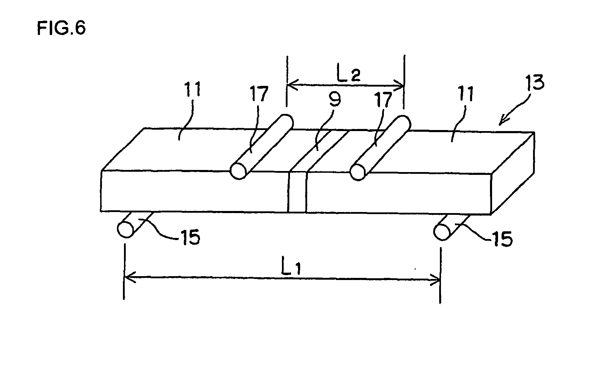

It is to be noted that "the bend Young's modulus in the bonding bend test" mentioned herein is subjected to a four-point bend test in conformity to JIS R1624. As shown in Fig. 5, a test piece 13 of the bonded article including two objects to be bonded 11 and a bonding material layer 9 which joins the heat treatments (e.g., a test piece having a structure of $10 \times 15 \times 70$ mm in which a bonding material layer of $10 \times 15 \times 1$ mm is sandwiched between two objects to be bonded of $10 \times 15 \times 34.5$ mm and $10 \times 15 \times 34.5$ mm) is cut and subjected to the four-point bend test so that a distance $L_1$ between two support points 15 is 60 mm and a distance $L_2$ between two load points 17 is 20 mm as shown in Fig. 6, whereby a stress-strain curve in the bend test is obtained, and the tilt of the curve is obtained, thereby obtaining the value of the modulus. This value is a value concerned with the compressive Young's modulus and tensile Young's modulus in the thickness direction of the bonding material layer. It is considered that when this "bend Young's modulus in the bonding bend test" has a value larger than that of "the compressive Young's modulus in the thickness direction of the bonding material layer", the tensile Young's modulus in the thickness direction of the bonding material layer is larger than the compressive Young's modulus.

Furthermore, in the bonded article of the present invention, the bonding material layer has a thermal conductivity of preferably 0.05 to 5 W/mK, more preferably 0.1 to 4 W/mK, further preferably 0.2 to 3.5 W/mK. When the thermal conductivity of the bonding material layer is less than 0.05 W/mK, a larger heat stress is generated during actual use, and the crack might easily be generated in the product. Moreover, when the thermal conductivity exceeds 5 W/mK, a problem, for example, the increase of the Young's modulus in the thickness direction of the bonding material layer might occur.

There is not any special restriction on each object to be bonded constituting the bonded article of the present invention, but examples of the object to be bonded preferably include a ceramic member for obtaining a ceramic structure and especially preferably include a honeycomb segment for obtaining a honeycomb structure. The honeycomb structure obtained by bonding such honeycomb segments can preferably be used in an application such as a diesel exhaust gas purifying filter which is exposed to the severe heat environment during the regeneration treatment of the filter.

In a manufacturing method of the bonded article of the present invention, two or more objects to be bonded are integrally bonded by using the bonding material composition of the present invention. It is to be noted that when the objects to be bonded are bonded to each other by using the bonding material composition of the present invention, a bonding temperature is preferably 1000°C or less (more preferably 50 to 900°C, further preferably 100 to 800°C) from a viewpoint that a sufficient strength and a bonded state can be developed. Even when the temperature exceeds 1000°C, the objects to be bonded can be bonded without any problem, but desired characteristics (the Young's modulus, a coefficient of thermal expansion, etc.) unfavorably cannot easily be obtained.

Next, there will be described a specific constitution example of a case where the bonded article of the present invention is a honeycomb structure in which a plurality of honeycomb segments (objects to be bonded) are bonded.

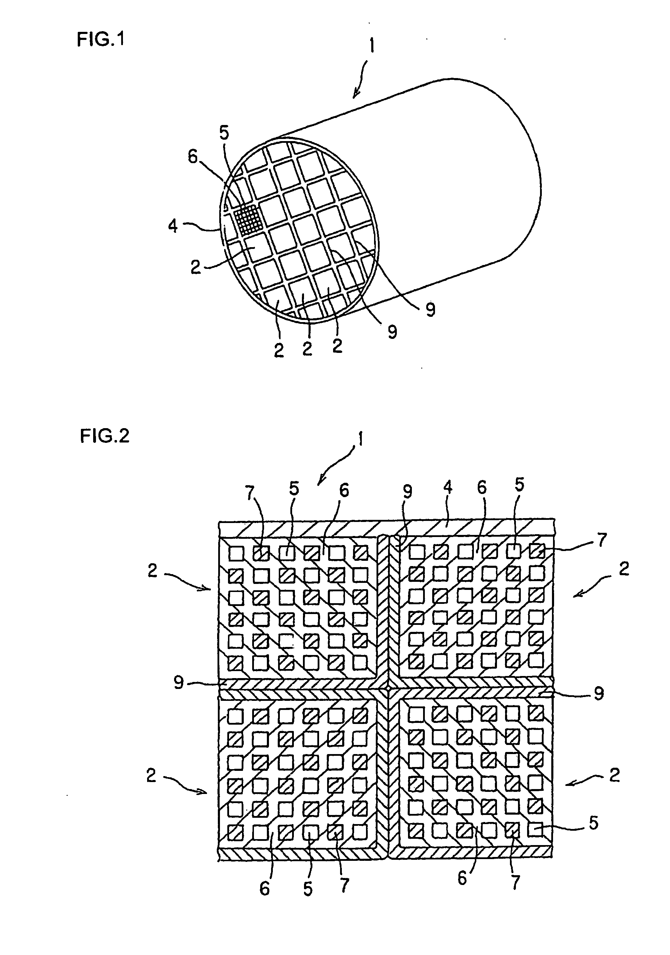

As shown in Figs. 1 and 2, a honeycomb structure 1 has a constitution of a bonded honeycomb segment article formed by integrally bonding honeycomb segments 2 by the bonding material layers 9 made of a bonding material composition of the present invention. Each of the honeycomb segments has a structure in which a plurality of cells 5 as through channels for a fluid partitioned and formed by porous partition walls 6 are arranged in parallel with one another in a central axis direction, and each honeycomb segment constitutes a part of the whole structure. Moreover, the honeycomb segments are assembled in a direction vertical to the central axis of the honeycomb structure 1 to constitute the whole structure.

The honeycomb segments 2 integrally bonded by the bonding material layers 9 are ground and processed so that the whole bonded article has a desired sectional shape such as a circular shape, an elliptic shape, a triangular shape or a square shape, and the outer peripheral surface of the article is coated with a coating material 4. It is to be noted that in a case where this honeycomb structure 1 is used as a DPF, as shown in Fig. 3 and Fig. 4 which is a sectional view cut along the A-A line of Fig. 3, the ends of the cells 5 of the honeycomb segment 2 are alternately plugged with a filling material 7 on each side.

As to predetermined cells 5 (inflow cells), the left ends of the cells are opened as shown in Figs. 3, 4, whereas the right ends thereof are plugged with the filling material 7. As to the other cells 5 (outflow cells) adjacent to these cells, the left ends of the cells are plugged with the filling material 7, and the right ends thereof are opened. By such plugging, as shown in Fig. 2, the end faces of the honeycomb segment 2 have a checkered pattern.

Fig. 4 shows a case where the left side of the honeycomb segment 2 is an inlet of an exhaust gas. The exhaust gas flows into the honeycomb segment 2 from the cells 5 (the inflow cells) which are not plugged but are opened. The exhaust gas flowing into the cells 5 (the inflow cells) passes through the porous partition walls 6, and is discharged from the other cells 5 (the outflow cells). Moreover, when the exhaust gas passes through the partition walls 6, a particulate material (particulates) including soot in the exhaust gas is collected by the partition walls 6. Thus, the exhaust gas can be purified. By such collection, the particulates including the soot are deposited in the honeycomb segment 2 with an elapse of time to increase a pressure loss, and hence a regeneration treatment for burning the soot and the like is periodically performed. It is to be noted that Figs. 2 to 4 show the honeycomb segment 2 having the whole square sectional shape, but the honeycomb segment may have a triangular shape, a hexagonal shape or the like. Moreover, the cells 5 may have a sectional shape such as a triangular shape, a hexagonal shape, a circular shape or an elliptic shape.

As shown in Fig. 2, the bonding material layers 9 are made of the bonding material composition of the present invention, and are applied to the outer peripheral surfaces of the honeycomb segments 2 to exert a function of bonding the honeycomb segments 2 to one another. The bonding material layers 9 may be applied to the outer peripheral surfaces of the adjacent honeycomb segments 2, respectively, or to one of the facing outer peripheral surfaces of the adjacent honeycomb segments 2. The layer is preferably applied only to one of the facing surfaces in this manner, whereby the amount of the bonding material layers 9 for use can be saved. There is not any special restriction on a direction in which the bonding material layer 9 is applied, and the layer may be applied in a longitudinal direction in the outer peripheral surface of the honeycomb segment, a direction vertical to the longitudinal direction in the outer peripheral surface of the honeycomb segment, a direction vertical to the outer peripheral surface of the honeycomb segment or the like, but the layer is preferably applied in the longitudinal direction in the outer peripheral surface of the honeycomb segment. The thickness of the bonding material layer 9 is determined in consideration of a bonding force between the honeycomb segments 2, and is appropriately selected from a range of, for example, 0.5 to 3.0 mm.

From the viewpoints of strength and thermal resistance, examples of the material of the honeycomb segment 2 for use in the present embodiment include a material made of at least one selected from the group consisting of silicon carbide (SiC), a silicon-silicon carbide based composite material made by using silicon carbide (SiC) as an aggregate and silicon (Si) as a combining material, silicon nitride, cordierite, mullite, alumina, spinel, a silicon carbide-cordierite based composite material, lithium aluminum silicate, aluminum titanate and an Fe-Cr-Al based metal. Above all, the material is preferably made of silicon carbide (SiC) or the silicon-silicon carbide based composite material.

To prepare the honeycomb segment 2, for example, a binder such as methyl cellulose, hydroxypropoxyl cellulose, hydroxyethyl cellulose, carboxymethyl cellulose or polyvinyl alcohol, a surfactant, water as a solvent and the like are added to the above appropriately selected material, to obtain a kneaded clay having plasticity, and this clay is extruded into the above shape, and then dried with microwaves, hot air or the like, followed by sintering.

As the filling material 7 for use in plugging the cells 5, a material similar to that of the honeycomb segment 2 may be used. To plug the cells with the filling material 7, for example, while the cells 5 which are not to be plugged are masked, the end face of the honeycomb segment 2 may be immersed into the slurry-like filling material to fill openings of the cells 5. The openings of the cells may be filled with the filling material 7 before or after firing the formed honeycomb segment 2, but the filling is preferably performed before the firing, because a firing step can end once.

After the above preparation of the honeycomb segment 2, the outer peripheral surface of the honeycomb segment 2 is coated with a paste-like bonding material composition to form the bonding material layer 9, and a plurality of honeycomb segments 2 are assembled so as to obtain a predetermined three-dimensional shape (the whole honeycomb structure 1). This assembled honeycomb segments are pressed, and then heated to dry. Thus, a bonded article is prepared in which the plurality of honeycomb segments 2 are integrally bonded. Afterward, this bonded article is ground and processed into the above shape, and the outer peripheral surface of the article is coated with the coating material 4, and heated to dry. Thus, the honeycomb structure 1 shown in Fig. 1 is prepared. As the material of the coating material 4, a material similar to that of the bonding material layer 9 may be used. The thickness of the coating material 4 is appropriately selected in a range of, for example, 0.1 to 1.5 mm.

Examples

Hereinafter, the present invention will be described in more detail in accordance with examples, but the present invention is not limited to these examples.

(Example 1)

(Preparation of Honeycomb Segment (Object to be Bonded))

As the material of a honeycomb segment, SiC powder and metal Si powder were mixed at a mass ratio of 80:

20, and a pore former, an organic binder, a surfactant and water were added to this mixture, to prepare a kneaded clay having plasticity. This clay was extruded and dried to obtain a formed honeycomb segment article having a partition wall thickness of 310 $\mu$m, a cell density of about 46.5 cells/cm$^2$ (300 cells/square inch), a square sectional shape with one side of 35 mm, and a length of 152 mm. Both the end faces of cells of this formed honeycomb segment article were plugged so that the end faces of the article had a checkered pattern. That is, the ends of the cells were plugged so that the ends of the adjacent cells were plugged on opposite sides. As a plugging material, a material similar to that of the honeycomb segment was used. Both the end faces of the cells were plugged and dried, and the article was degreased in the atmosphere at about 400°C, and then fired in an Ar inactive atmosphere at about 1450°C, thereby obtaining the honeycomb segment having a porous structure in which SiC crystal particles were combined by Si.

(Preparation of Bonding Material Composition)

On conditions shown in Table 1, a mixture of plate-like particles, non-plate-like particles A (an average particle diameter of 10 $\mu$m or more), non-plate-like particles B (an average particle diameter of less than 10 $\mu$m), an organic binder and a resin balloon was further mixed with an inorganic adhesive, a dispersant and water, and kneaded by a mixer for 30 minutes, whereby paste-like bonding material compositions (bonding material composition Nos. 1 to 32) having different compositions were obtained, respectively. At this time, the amount of the water to be added was regulated so that the viscosity of the paste-like bonding material composition was in a range of 200 to 600 Pa•s. It is to be noted that calcinated mica used as the plate-like particles in the bonding material composition No. 16 was calcinated at 800°C, and calcinated talc used as the plate-like particles in the bonding material composition No. 17 was calcinated at 900°C. The ratios of the plate-like particles, the non-plate-like particles A, the non-plate-like particles B and the inorganic adhesive are shown in mass%, respectively, while the total amount of them is 100. Moreover, the ratios of the organic binder, the resin balloon and the dispersant as sub-components are shown in mass%, while the total amount of the main components is 100. The aspect ratio of the plate-like particles is calculated as "a major diameter/a thickness" of the particles, and "the major diameter" and "the thickness" were measured by observation with an electron microscope. That is, the plate-like particles are observed in an arbitrary direction vertical to the thickness direction thereof, and an electron microscope photograph of the particles was subjected to image processing, whereby the thicknesses of the particles were measured. Moreover, in the same image, the lengths of the particles in the direction vertical to the thickness direction were regarded as major diameters, and the major diameters were measured by the image processing. It is to be noted that this measurement was performed on ten or more particles randomly selected from an observation view field, and the average value of the aspect ratios of the particles was obtained as the aspect ratio of the plate-like particles.

(Preparation of Honeycomb Structure (Bonded Article))

The outer wall surface of the honeycomb segment was coated with the bonding material composition No. 1 so that a coating direction was the longitudinal direction of the honeycomb segment and so that the composition had a thickness of about 1 mm, thereby forming a bonding material layer, and another honeycomb segment was disposed on the layer. This step was repeated to prepare a laminated honeycomb segment article including 16 honeycomb segments as a combination of 4 x 4, and a pressure or the like was appropriately applied from the outside to the article to join the whole article, followed by drying at 140°C for 2 hours, thereby obtaining a bonded honeycomb segment article. The outer periphery of the resultant bonded honeycomb segment article was cut into a cylindrical shape, and the outer peripheral surface of the article was coated with a coating material, followed by drying and hardening at 700°C for 2 hours, thereby obtaining a honeycomb structure.

(Evaluation of Bonding Material Layer of Bonded Article)

As to the bonding material layer of the resultant honeycomb structure, a porosity, an average pore diameter, the ratio of pores having pore diameters of 20 to 200 $\mu$m in all the pores, $\varepsilon_2/\varepsilon_1$, the ratio of the compressive Young's modulus in the thickness direction of the bonding material layer with respect to the Young's modulus of an object to be bonded, and a ratio between Young's modulus in the bonding bend test of the bonded article and the compressive Young's modulus of the bonding material layer were obtained by the following methods. The results are shown in Table 2.

Porosity:

A portion of the bonding material layer having an arbitrary shape (e.g., 10×10×1 mm) was cut from the honeycomb structure, and the porosity was calculated by Archimedes process.

Observation of Fine Structure:

A portion including the bonding material layer was cut in an arbitrary shape from the honeycomb structure (e.g., a $20 \times 10 \times 10$ mm plate-like shape), and to observe the section of the bonding material layer, a predetermined face of the portion was polished, to obtain an observation face, after impregnation with a resin. This face was observed by an electron microscope, to observe the sizes, distribution state and the like of the pores in the section of the bonding material layer. The observation image was subjected to image analysis, whereby a pore portion was extracted, and the sizes of the pores were measured, thereby obtaining the average pore diameter and the ratio of the pores having pore diameters of 20 to 200 $\mu$m in all the pores. Moreover, the bonding material layer was divided into four equal portions in a bonding thickness direction, and the porosities of the respective portions ($P_1$, $P_2$, $P_3$ and $P_4$ in order from the portion which comes in contact with one segment (a object to be bonded A) to the opposite segment (a object to be bonded B)) were calculated by the image analysis, thereby calculating the value of $\varepsilon_2/\varepsilon_1$ in which $\varepsilon_1$ is an average of $P_1$ and $P_4$ and $\varepsilon_2$ is an average of $P_2$ and $P_3$.

Compressive Young's Modulus:

A portion of the bonding material layer was cut in a predetermined shape from the honeycomb structure (e.g., a $10 \times 10 \times 1$ mm plate-like shape), and the displacement of this cut test piece was measured when the test piece was loaded with a predetermined compressive load, whereby the modulus was calculated from a stress-strain diagram of the test piece (the Young's modulus of the object to be bonded was calculated from a load-displacement curve in a three-point bend test in conformity to JIS R1601).

Bend Young's Modulus in Bonding Bend Test:

A test piece (e.g., $10 \times 15 \times 70$ mm) of a bonded article including two objects to be bonded and a bonding material layer was cut out in conformity to JIS R1624, and a stress-strain curve in the bend test was obtained, whereby the tilt of the curve was obtained as the bend Young's modulus in the bonding bend test.

Thermal Conductivity:

A portion of the bonding material layer was cut in an arbitrary shape (e.g., a $10 \times 10 \times 1$ mm plate-like shape) from the honeycomb structure, and the thermal conductivity was measured in conformity to JIS R1611.

(Evaluation of Honeycomb Structure)

The state of the resultant honeycomb structure after the bonding was confirmed, and a quick heating test (a burner spalling test) was performed at test temperatures of 900°C and 1000°C by the following method. The generation state of crack in the honeycomb structure after the test was observed. The results are shown in Table 3.

Burner Spalling Test (Quick heating Test):

Air heated by a burner was allowed to flow through the honeycomb structure, to make a temperature difference between the center of the structure and an outer portion thereof, and a thermal shock resistance was evaluated in accordance with a temperature at which any crack was not generated in the honeycomb structure, in this test (as the temperature was high, the thermal shock resistance was high). It is to be noted that in Table 3, when a cross is shown, it is meant that the crack is generated at the test temperature of 900°C. In the case of a circle, it is meant that any crack is not generated at the test temperature of 900°C. In the case of a double circle, it is meant that any crack is not generated at the test temperature of 1000°C.

(Examples 2 to 28, Comparative Examples 1 to 4)

In Examples 2 to 28, honeycomb structures were prepared in the same manner as in Example 1 except that the bonding material composition No. 1 was changed to the bonding material composition Nos. 2 to 28 shown in Table 1. In Comparative Examples 1 to 4, honeycomb structures were prepared in the same manner as in Example 1 except that the bonding material composition was changed to the bonding material composition Nos. 29 to 32. The resultant honeycomb structures (Examples 2 to 28, Comparative Examples 1 to 4) were evaluated and tested in the same manner as in Example 1. The results are shown in Tables 2 and 3.

[Table 1]

| Bonding material composition No. | Plate-like particles | | | Non-plate-like particles A | | Non-plate-like particles B | | Plate-like particles + non-plate-like particles A (mass%) | Inorganic adhesive (material/ mass%) | Organic binder (material/ mass%) | Resin balloon (mass%) | Dispersant (mass%)* |
|---|---|---|---|---|---|---|---|---|---|---|---|---|
| | Material and content (material/ mass%) | Aspect ratio | Average particle diameter (μm) | Material and content (material/ mass%) | Average particle diameter (μm) | Material and content (material/ mass%) | Average particle diameter (μm) | | | | | |
| ** 1 | Mica/4.0 | 20 | 40 | Silicon carbide/ 49.3 | 120 | Silicon carbide/ 23.1 | 1.5 | 53.3 | Colloidal silica/23.6 | CMC/ 0.15 | 0.5 | 0.07 |
| 2 | Mica/7.6 | 20 | 40 | Silicon carbide/ 45.4 | 120 | Silicon carbide/ 23.3 | 1.5 | 53.0 | Colloidal silica/23.7 | CMC/ 0.15 | 0.5 | 0.07 |
| 3 | Mica/15.5 | 20 | 40 | Silicon carbide/ 36.8 | 120 | Silicon carbide/ 23.6 | 1.5 | 52.3 | Colloidal silica/24.1 | CMC/ 0.15 | 0.5 | 0.07 |
| 4 | Mica/31.9 | 20 | 40 | Silicon carbide/ 19.0 | 120 | Silicon carbide/ 24.3 | 1.5 | 50.9 | Colloidal silica/24.8 | CMC/ 0.15 | 0.5 | 0.07 |
| ** 5 | Mica/36.2 | 20 | 40 | Silicon carbide/ 14.3 | 120 | Silicon carbide/ 24.5 | 1.5 | 50.5 | Colloidal silica/25.0 | CMC/ 0.15 | 0.5 | 0.07 |
| 6 | Mica/12.3 | 20 | 40 | Silicon carbide/ 29.1 | 120 | Silicon carbide/ 29.1 | 1.5 | 41.4 | Colloidal silica/29.5 | CMC/ 0.15 | 0.5 | 0.07 |
| 7 | Mica/18.5 | 20 | 40 | Silicon carbide/ 43.7 | 120 | Silicon carbide/ 18.8 | 1.5 | 62.2 | Colloidal silica/19.0 | CMC/ 0.15 | 0.5 | 0.07 |
| 8 | Mica/15.5 | 13 | 40 | Silicon carbide/ 36.8 | 120 | Silicon carbide/ 23.6 | 1.5 | 52.3 | Colloidal silica/24.1 | CMC/ 0.15 | 0.5 | 0.07 |

EP 2 123 617 B1

14

| Bonding material composition No. | Plate-like particles | | | Non-plate-like particles A | | Non-plate-like particles B | | Plate-like particles + non-plate-like particles A (mass%) | Inorganic adhesive (material/ mass%) | Organic binder (material/ mass%) | Resin balloon (mass%) | Dispersant (mass%)* |
|---|---|---|---|---|---|---|---|---|---|---|---|---|
| | Material and content (material/ mass%) | Aspect ratio | Average particle diameter ($\mu$m) | Material and content (material/ mass%) | Average particle diameter ($\mu$m) | Material and content (material/ mass%) | Average particle diameter ($\mu$m) | | | | | |
| 9 | Mica/15.5 | 25 | 40 | Silicon carbide/ 36.8 | 120 | Silicon carbide/ 23.6 | 1.5 | 52.3 | Colloidal silica/24.1 | CMC/ 0.15 | 0.5 | 0.07 |
| 10 | Mica/15.5 | 20 | 20 | Silicon carbide/ 36.8 | 120 | Silicon carbide/ 23.6 | 1.5 | 52.3 | Colloidal silica/24.1 | CMC/ 0.15 | 0.5 | 0.07 |
| 11 | Mica/15.5 | 20 | 50 | Silicon carbide/ 36.8 | 120 | Silicon carbide/ 23.6 | 1.5 | 52.3 | Colloidal silica/24.1 | CMC/ 0.15 | 0.5 | 0.07 |
| 12 | Talc/15.5 | 6 | 20 | Silicon carbide/ 36.8 | 120 | Silicon carbide/ 23.6 | 1.5 | 52.3 | Colloidal silica/24.1 | CMC/ 0.15 | 0.5 | 0.07 |
| 13 | Talc/15.5 | 6 | 40 | Silicon carbide/ 33.8 | 120 | Silicon carbide/ 23.6 | 1.5 | 52.3 | Colloidal silica/24.1 | CMC/ 0.15 | 0.5 | 0.07 |
| 14 | Glass flake/15.5 | 22 | 40 | Silicon carbide/ 36.8 | 120 | Silicon carbide/ 23.6 | 1.5 | 52.3 | Colloidal silica/24.1 | CMC/ 0.15 | 0.5 | 0.07 |
| 15 | Glass flake/15.5 | 22 | 160 | Silicon carbide/ 36.8 | 120 | Silicon carbide/ 23.6 | 1.5 | 52.3 | Colloidal silica/24.1 | CMC/ 0.15 | 0.5 | 0.07 |
| 16 | Calcinated mica/15.5 | 20 | 40 | Silicon carbide/ 368 | 120 | Silicon carbide/ 23.6 | 1.5 | 52.3 | Colloidal silica/24.1 | CMC/ 0.15 | 0.5 | 0.07 |

EP 2 123 617 B1

| Bonding material composition No. | Plate-like particles | | | Non-plate-like particles A | | Non-plate-like particles B | | Plate-like particles + non-plate-like particles A (mass%) | Inorganic adhesive (material/ mass%) | Organic binder (material/ mass%) | Resin balloon (mass%) | Dispersant (mass%)* |
|---|---|---|---|---|---|---|---|---|---|---|---|---|
| | Material and content (material/ mass%) | Aspect ratio | Average particle diameter (μm) | Material and content (material/ mass%) | Average particle diameter (μm) | Material and content (material/ mass%) | Average particle diameter (μm) | | | | | |
| 17 | Calcinated talc/15.5 | 6 | 20 | Silicon carbide/ 36.8 | 120 | Silicon carbide/ 23.6 | 1.5 | 52.3 | Colloidal silica/24.1 | CMC/ 0.15 | 0.5 | 0.07 |
| 18 | Mica/155 | 20 | 40 | Alumina/ 36.8 | 110 | Silicon carbide/ 23.6 | 1.5 | 52.3 | Colloidal silica/24.1 | CMC/ 0.15 | 0.5 | 0.07 |
| 19 | Mica/155 | 20 | 40 | Silica/ 36.8 | 100 | Silicon carbide/ 23.6 | 1.5 | 52.3 | Colloidal silica/24.1 | CMC/ 0.15 | 0.5 | 0.07 |
| 20 | Mica/15.5 | 20 | 40 | Mullite/ 36.8 | 120 | Silicon carbide/ 23.6 | 1.5 | 52.3 | Colloidal silica/24.1 | CMC/ 0.15 | 0.5 | 0.07 |
| 21 | Mica/15.5 | 20 | 40 | Zirconia/ 36.8 | 100 | Silicon carbide/ 23.6 | 1.5 | 52.3 | Colloidal silica/24.1 | CMC/ 0.15 | 0.5 | 0.07 |
| 22 | Mica/15.5 | 20 | 40 | Glass/ 36.8 | 120 | Silicon carbide/ 23.6 | 1.5 | 52.3 | Colloidal silica/24.1 | CMC/ 0.15 | 0.5 | 0.07 |
| 23 | Mica/15.5 | 20 | 40 | Alumina/ 36.8 | 110 | Alumina/ 23.6 | 1.2 | 52.3 | Colloidal silica/24.1 | CMC/ 0.15 | 0.5 | 0.07 |
| 24 | Mica/15.5 | 20 | 40 | Silicon carbide/ 36.8 | 120 | Alumina/ 23.6 | 1.2 | 52.3 | Colloidal silica/24.1 | CMC/ 0.15 | 0.5 | 0.07 |
| 25 | Mica/15.5 | 20 | 40 | Silicon carbide/ 36.8 | 120 | Silicon nitride/ 23.6 | 1.3 | 52.3 | Colloidal silica/24.1 | CMC/ 0.15 | 0.5 | 0.07 |

EP 2 123 617 B1

(continued)

| Bonding material composition No. | Plate-like particles | | | Non-plate-like particles A | | Non-plate-like particles B | | Plate-like particles + non-plate-like particles A (mass%) | Inorganic adhesive (material/ mass%) | Organic binder (material/ mass%) | Resin balloon (mass%) | Dispersant (mass%)* |
|---|---|---|---|---|---|---|---|---|---|---|---|---|
| | Material and content (material/ mass%) | Aspect ratio | Average particle diameter ($\mu$m) | Material and content (material/ mass%) | Average particle diameter ($\mu$m) | Material and content (material/ mass%) | Average particle diameter ($\mu$m) | | | | | |
| 26 | Mica/15.5 | 20 | 40 | Silicon carbide/ 36.8 | 120 | Aluminum nitride/ 23.6 | 1.7 | 52.3 | Colloidal silica/24.1 | CMC/ 0.15 | 0.5 | 0.07 |
| 27 | Mica/15.5 | 20 | 40 | Silicon carbide/ 36.8 | 120 | Silicon carbide/ 23.6 | 1.5 | 52.3 | Colloidal silica/24.1 | CMC/ 0.15 | 1 | 0.07 |
| 28 | Mica/15.5 | 20 | 40 | Silicon carbide/ 36.8 | 120 | Silicon carbide/ 23.6 | 1.5 | 52.3 | Colloidal silica/24.1 | CMC/ 0.15 | 2 | 0.07 |
| 29 | - | - | - | Fiber/ 52.3 | 100 | Silicon carbide/ 23.6 | 1.5 | 52.3 | Colloidal silica/24.1 | CMC/ 0.15 | 0.5 | 0.07 |
| 30 | - | - | - | Silicon carbide/ 52.3 | 120 | Silicon carbide/ 23.6 | 1.5 | 52.3 | Colloidal silica/24.1 | CMC/ 0.15 | 0.5 | 0.07 |
| 31 | Mica/15.5 | 20 | 40 | Silicon carbide/ 60.4 | 120 | - | - | 75.9 | Colloidal silica/24.1 | CMC/ 0.15 | 0.5 | 0.07 |
| 32 | Mica/15.5 | 20 | 40 | - | - | Silicon carbide/ 60.4 | 1.5 | 15.5 | Colloidal silica/24.1 | CMC/ 0.15 | 05 | 0.07 |

*Mass% of superaddition when main components (plate-like particles, non-plate-like particles A, non-plate-like particles B and inorganic adhesive) are regarded as 100
**Not within the scope of the claims.

EP 2 123 617 B1

[Table 2]

| | Bonding material composition No. | Porosity (%) | Average pore diameter (µm) | Ratio of 20 to 200 µm pores in all pores (%) | $\varepsilon_2/\varepsilon_1$ | Ratio of compressive Young's modulus in thickness direction of bonding material layer respect to Young's modulus of object to be bonded (%) | Ratio between Young's modulus in bonding bend test of bonded article and compressive Young's modulus of bonding material layer | Thermal conductivity of bonding layer (W/mK) |
|---|---|---|---|---|---|---|---|---|
| ** Example 1 | 1 | 55 | 160 | 45 | 1.18 | 1.8 | 15.0 | 1.4 |
| Example 2 | 2 | 58 | 150 | 48 | 1.16 | 1.5 | 13.0 | 1.3 |
| Example 3 | 3 | 64 | 130 | 55 | 1.11 | 1.2 | 11.0 | 1.1 |
| Example 4 | 4 | 67 | 120 | 65 | 1.06 | 1 | 12.0 | 0.8 |
| ** Example 5 | 5 | 69 | 110 | 67 | 1.05 | 1 | 18.0 | 0.7 |
| Example 6 | 6 | 61 | 140 | 50 | 1.14 | 1.3 | 13.0 | 1.3 |
| Example 7 | 7 | 68 | 120 | 55 | 1.08 | 1.1 | 13.0 | 1.2 |
| Example 8 | 8 | 59 | 140 | 55 | 1.13 | 1.4 | 11.0 | 1.1 |
| Example 9 | 9 | 66 | 120 | 60 | 1.09 | 1.1 | 12.0 | 1 |
| Example 10 | 10 | 60 | 140 | 50 | 1.12 | 1.4 | 11.0 | 1.2 |
| Example 11 | 11 | 66 | 120 | 57 | 1.10 | 1.1 | 12.0 | 0.9 |
| Example 12 | 12 | 55 | 130 | 47 | 1.18 | 1.8 | 10.0 | 0.4 |
| Example 13 | 13 | 58 | 140 | 50 | 1.15 | 1.6 | 11.0 | 0.7 |
| Example 14 | 14 | 65 | 150 | 56 | 1.12 | 1.3 | 16.0 | 0.3 |
| Example 15 | 15 | 69 | 220 | 58 | 1.16 | 1 | 18.0 | 0.5 |
| Example 16 | 16 | 62 | 130 | 56 | 1.11 | 1.3 | 11.0 | 1 |
| Example 17 | 17 | 54 | 130 | 49 | 1.18 | 1.8 | 10.0 | 0.4 |
| Example 18 | 18 | 65 | 150 | 60 | 1.15 | 1.1 | 15.0 | 0.8 |
| Example 19 | 19 | 63 | 130 | 56 | 1.13 | 1.2 | 14.0 | 0.6 |
| Example 20 | 20 | 62 | 130 | 56 | 1.12 | 1.3 | 12.0 | 0.5 |
| Example 21 | 21 | 61 | 120 | 54 | 1.15 | 1.4 | 16.0 | 0.5 |
| Example 22 | 22 | 64 | 140 | 56 | 1.13 | 1.2 | 13.0 | 0.4 |
| Example 23 | 23 | 63 | 130 | 55 | 1.15 | 1.3 | 15.0 | 0.4 |
| Example 24 | 24 | 63 | 140 | 56 | 1.14 | 1.3 | 13.0 | 0.5 |
| Example 25 | 25 | 60 | 130 | 53 | 1.17 | 1.5 | 16.0 | 0.7 |
| Example 26 | 26 | 65 | 150 | 57 | 1.14 | 1.2 | 12.0 | 0.8 |
| Example 27 | 27 | 66 | 130 | 62 | 1.08 | 1.1 | 11.0 | 0.9 |
| Example 28 | 28 | 69 | 110 | 65 | 1.04 | 0.9 | 10.0 | 0.7 |

(continued)

| | Bonding material composition No. | Porosity (%) | Average pore diameter ($\mu$m) | Ratio of 20 to 200 $\mu$m pores in all pores (%) | $\varepsilon_2/\varepsilon_1$ | Ratio of compressive Young's modulus in thickness direction of bonding material layer respect to Young's modulus of object to be bonded (%) | Ratio between Young's modulus in bonding bend test of bonded article and compressive Young's modulus of bonding material layer | Thermal conductivity of bonding layer (W/mK) |
|---|---|---|---|---|---|---|---|---|
| Comparative Example 1 | 29 | 60 | 160 | 45 | 1.26 | 1 | 45.0 | 0.4 |
| Comparative Example 2 | 30 | 55 | 120 | 56 | 1.18 | 2.5 | 22.0 | 1 |
| Comparative Example 3 | 31 | 67 | 150 | 60 | 1.15 | 3.1 | 25 | 0.8 |
| Comparative Example 4 | 32 | 48 | 80 | 40 | 1.32 | 4 | 30 | 1.2 |
| **Not within the scope of the claims. | | | | | | | | |

[Table 3]

| Example | Bonding material composition No. | State after bonding | Crack of end | Crack of outer peripheral portion | Crack of bonding material layer |
|---|---|---|---|---|---|
| ** Example 1 | 1 | Satisfactory | ◎ | ○ | ○ |
| Example 2 | 2 | Satisfactory | ◎ | ○ | ○ |
| Example 3 | 3 | Satisfactory | ◎ | ◎ | ◎ |
| Example 4 | 4 | Satisfactory | ◎ | ◎ | ◎ |
| ** Example 5 | 5 | Satisfactory | ○ | ◎ | ◎ |
| Example 6 | 6 | Satisfactory | ◎ | ◎ | ○ |
| Example 7 | 7 | Satisfactory | ◎ | ◎ | ◎ |
| Example 8 | 8 | Satisfactory | ◎ | ◎ | ○ |
| Example 9 | 9 | Satisfactory | ◎ | ◎ | ◎ |
| Example 10 | 10 | Satisfactory | ◎ | ○ | ◎ |
| Example 11 | 11 | Satisfactory | ◎ | ◎ | ◎ |
| Examples 12 | 12 | Satisfactory | ◎ | ○ | ○ |
| Example 13 | 13 | Satisfactory | ◎ | ○ | ○ |
| Example 14 | 14 | Satisfactory | ○ | ○ | ◎ |
| Example 15 | 15 | Satisfactory | ○ | ◎ | ◎ |
| Example 16 | 16 | Satisfactory | ◎ | ◎ | ◎ |

(continued)

| Example | Bonding material composition No. | State after bonding | Crack of end | Crack of outer peripheral portion | Crack of bonding material layer |
|---|---|---|---|---|---|
| Example 17 | 17 | Satisfactory | ◎ | ○ | ◎ |
| Example 18 | 18 | Satisfactory | ◎ | ○ | ◎ |
| Example 19 | 19 | Satisfactory | ◎ | ◎ | ◎ |
| Example 20 | 20 | Satisfactory | ○ | ○ | ◎ |
| Example 21 | 21 | Satisfactory | ◎ | ○ | ◎ |
| Example 22 | 22 | Satisfactory | ◎ | ○ | ◎ |
| Example 23 | 23 | Satisfactory | ◎ | ○ | ◎ |
| Example 24 | 24 | Satisfactory | ◎ | ◎ | ○ |
| Example 25 | 25 | Satisfactory | ◎ | ○ | ○ |
| Example 26 | 26 | Satisfactory | ◎ | ○ | ◎ |
| Example 27 | 27 | Satisfactory | ◎ | ◎ | ◎ |
| Example 28 | 28 | Satisfactory | ◎ | ◎ | ○ |
| Comparative Example 1 | 29 | Satisfactory | × | ◎ | ◎ |
| Comparative Example 2 | 30 | Satisfactory | ○ | × | × |
| Comparative Example 3 | 31 | Satisfactory | ○ | × | × |
| Comparative Example 4 | 32 | Slightly cracked | ○ | × | × |
| ** Not within the scope of the claims. | | | | | |

(Consideration)

As seen from the results of Tables 2 and 3, in Examples 1 to 28 according to the embodiment of the present invention, the evaluation of the bonding material composition (the bonding material layer) after hardening was satisfactory, and a bonded state between honeycomb segments was satisfactory. Moreover, even after the quick heating test, any crack was not generated in the end, outer peripheral portion and bonding material layer of the honeycomb structure, and the examples were satisfactory. On the other hand, in Comparative Example 1 using the bonding material composition including a fiber instead of the plate-like particles as a filler, the ratio between the Young's modulus in the bonding bend test of the bonded article and the compressive Young's modulus of the bonding material layer was large, and the crack was generated at the end of the honeycomb structure after the quick heating test. In Comparative Example 2 using the bonding material composition which did not include any plate-like particle, the ratio of the compressive Young's modulus in the thickness direction of the bonding material layer with respect to the Young's modulus of the object to be bonded was large, and the crack was generated in the outer peripheral portion and bonding material layer of the honeycomb structure after the quick heating test. In Comparative Example 3 using the bonding material composition which does not include any non-plate-like particles B and Comparative Example 4 using the bonding material composition which does not include any non-plate-like particles A, both the ratio between the Young's modulus in the bonding bend test of the bonded article and the compressive Young's modulus of the bonding material layer and the ratio of the compressive Young's modulus in the thickness direction of the bonding material layer with respect to the Young's modulus of the object to be bonded are large, and the crack was generated in the outer peripheral portion and bonding material layer of the honeycomb structure after the quick heating test.

Industrial Applicability

The present invention can preferably be utilized in manufacturing a bonded article obtained by integrally bonding a plurality of objects to be bonded, for example, a honeycomb structure obtained by integrally bonding a plurality of honeycomb segments, for use in an application such as a DPF.

## Claims

1. A bonding material composition to obtain a bonded article in which two or more objects to be bonded are integrally bonded via bonding material layers (9), the bonding material composition comprising plate-like particles, non-plate-like particles and an inorganic adhesive as main components, wherein the non-plate-like particles are constituted of non-plate-like particles A having an average particle diameter of 10 $\mu$m or more and non-plate-like particles B having an average particle diameter of less than 10 $\mu$m, and a ratio of the non-plate-like particles B is 10 to 35 mass% of the total main components;
wherein a ratio of the plate-like particles is 5 to 35 mass% of the total main components.

2. The bonding material composition according to claim 1, wherein a total ratio of the plate-like particles and the non-plate-like particles A is 40 to 65 mass% of the total main components.

3. The bonding material composition according to claim 1 or claim 2, wherein the plate-like particles have an aspect ratio of 3 or more.

4. The bonding material composition according to any one of claims 1 to 3, wherein the plate-like particles have an average particle diameter of 2 to 200 $\mu$m.

5. The bonding material composition according to any one of claims 1 to 4, wherein the plate-like particles are plate-like particles made of one or more materials selected from the group consisting of mica, talc, boron nitride and glass flakes.

6. The bonding material composition according to any one of claims 1 to 5, wherein the non-plate-like particles are non-plate-like particles made of one or more materials selected from the group consisting of alumina, silica, mullite, zirconia, silicon carbide, silicon nitride, aluminum nitride, boron nitride and glass.

7. The bonding material composition according to any one of claims 1 to 6, wherein the objects to be bonded are honeycomb segments (2).

8. A bonded article in which two or more objects to be bonded are integrally bonded via bonding material layers (9) formed of the bonding material composition according to any one of claims 1 to 7, wherein the bonding material layers (9) have a porosity of 40 to 80%, and the bonding material layers (9) have an average pore diameter of 20 to 200 $\mu$m.

9. The bonded article according to claim 8, wherein the volume ratio of pores having pore diameters of 20 to 200 $\mu$m in all the pores of the bonding material layers is in a range of 30 vol% or more.

10. The bonded article according to claim 8 or 9, wherein when a object to be bonded A and an object to be bonded B are bonded via the bonding material layer (9) having a thickness t, the bonding material layer (9) includes a bonding material layer I of a portion having a thickness of 0.25t from an interface between the object to be bonded A and the bonding material layer, a bonding material layer III of a portion having a thickness of 0.25t from an interface between the object to be bonded B and the bonding material layer and a bonding material layer II of a portion having a thickness of 0.5t between the bonding material layer I and the bonding material layer III, and an average porosity $\varepsilon_1$ of the bonding material layers I and III and a porosity $\varepsilon_2$ of the bonding material layer II satisfy a relational formula of $0.8 < \varepsilon_2/\varepsilon_1 < 1.2$.

11. The bonded article according to any one of claims 8 to 10, wherein the compressive Young's modulus in the thickness direction of the bonding material layer (9) is 20% or less of the Young's modulus of the object to be bonded (11).

12. The bonded article according to any one of claims 8 to 11, wherein when two objects to be bonded and the bonding material layer (9) which joins the objects to be bonded are cut out as a test piece (13) and subjected to a bonding bend test, bend Young's modulus in the bonding bend test and the compressive Young's modulus in the thickness direction of the bonding material layer have a ratio of 0.8 to 20.

13. A manufacturing method of a bonding material composition, comprising the steps of mixing and kneading, into a paste-like state, a material containing plate-like particles, non-plate-like particles A having an average particle diameter of 10 $\mu$m or more, non-plate-like particles B having an average particle diameter of less than 10 $\mu$m and an inorganic adhesive as main components, wherein a ratio of the non-plate-like particles B is 10 to 35 mass% of the total main components;
and wherein a ratio of the plate-like particles is 5 to 35 mass% of the total main components.

14. A manufacturing method of a bonded article, comprising the steps of integrally bonding two or more objects to be bonded by use of the bonding material composition according to any one of claims 1 to 7.

## Patentansprüche

1. Haftmaterialzusammensetzung zum Erhalten eines haftschlüssig verbundenen Artikels, wobei zwei oder mehr zu verbindende Objekte über Bindungsmaterialschichten (9) einstückig verbunden sind, wobei die Haftmaterialzusammensetzung plattenartige Teilchen, nicht-plattenartige Teilchen und ein anorganisches Haftmittel als Hauptkomponenten umfasst, worin die nicht-plattenartigen Teilchen sich aus nicht-plattenartigen Teilchen A mit einem mittleren Teilchendurchmesser von 10 $\mu$m oder mehr und nicht-plattenartigen Teilchen B mit einem mittleren Teilchendurchmesser von weniger als 10 $\mu$m zusammensetzen und der Anteil der nicht-plattenartigen Teilchen B 10 bis 35 Masse-% der Hauptkomponenten insgesamt beträgt;
worin der Anteil der plattenartigen Teilchen 5 bis 35 Masse-% der Hauptkomponenten insgesamt beträgt.

2. Haftmaterialzusammensetzung nach Anspruch 1, worin der Gesamtanteil der plattenartigen Teilchen und der nicht-plattenartigen Teilchen A 40 bis 65 Masse-% der Hauptkomponenten insgesamt beträgt.

3. Haftmaterialzusammensetzung nach Anspruch 1 oder 2, worin die plattenartigen Teilchen ein Seitenverhältnis von 3 oder mehr aufweisen.

4. Haftmaterialzusammensetzung nach einem der Ansprüche 1 bis 3, worin die plattenartigen Teilchen eine mittlere Teilchengröße von 2 bis 200 $\mu$m aufweisen.

5. Haftmaterialzusammensetzung nach einem der Ansprüche 1 bis 4, worin die plattenartigen Partikel plattenartige Partikel aus einem oder mehreren Materialien ausgewählt aus der Gruppe bestehend aus Glimmer, Talkum, Bornitrid und Glasschuppen sind.

6. Haftmaterialzusammensetzung nach einem der Ansprüche 1 bis 5, worin die nicht-plattenartigen Partikel nicht-plattenartige Partikel aus einem oder mehreren Materialien ausgewählt aus der Gruppe bestehend aus Aluminiumoxid, Siliciumdioxid, Mullit, Zirkonium, Siliziumkarbid, Siliziumnitrid, Aluminiumnitrid, Bornitrid und Glas sind.

7. Haftmaterialzusammensetzung nach einem der Ansprüche 1 bis 6, worin die haftschlüssig zu verbindenden Objekte Wabensegmente (2) sind.

8. Verbundener Artikel, wobei zwei oder mehrere haftschlüssig zu verbindende Objekte einstückig über Haftmaterialschichten (9), die aus der Haftmaterialzusammensetzung nach einem der Ansprüche 1 bis 7 ausgebildet sind, miteinander haftschlüssig verbunden sind, worin die Haftmaterialschichten (9) eine Porosität von 40-80 % aufweisen und die Haftmaterialschichten (9) einen mittleren Porendurchmesser von 20 bis 200 $\mu$m aufweisen.

9. Verbundener Artikel nach Anspruch 8, worin das Volumenverhältnis von Poren mit Porendurchmesser von 20 bis 200 $\mu$m bei allen Poren der Haftmaterialschichten in einem Bereich von 30 Vol.-% oder mehr liegt.

10. Verbundener Artikel nach Anspruch 8 oder 9, worin wenn ein haftschlüssig zu verbindendes Objekt A und ein haftschlüssig zu verbindendes Objekt B über die Haftmaterialschicht (9) mit einer Dicke t verbunden werden, die Haftmaterialschicht (9) eine Haftmaterialschicht I eines Abschnitts mit einer Dicke von 0,25t ausgehend von einer Grenzfläche zwischen dem zu verbindenden Objekt A und der Haftmaterialschicht, eine Haftmaterialschicht III aus einem Abschnitt mit einer Dicke von 0,25t ausgehend von einer Grenzfläche zwischen dem zu verbindenden Objekt B und der Haftmaterialschicht und eine Haftmaterialschicht II eines Abschnitts mit einer Dicke von 0,5t zwischen der Haftmaterialschicht I und der Haftmaterialschicht III umfasst, und eine mittlere Porosität $\varepsilon1$ der Haftmaterial-schichten I und III und eine Porosität $\varepsilon2$ der Haftmaterialschicht II eine Verhältnisgleichung von $0,8 < \varepsilon2/\varepsilon1 < 1,2$ erfüllen.

11. Verbundener Artikel nach einem der Ansprüche 8 bis 10, worin der Elastizitätsmodul bei Druck in die Dickenrichtung der Haftmaterialschicht (9) 20 % oder weniger des Elastizitätsmoduls des zu verbindenden Objekts (11) beträgt.

12. Verbundener Artikel nach einem der Ansprüche 8 bis 11, worin wenn zwei zu verbindende Objekte und die Haftmaterialschicht (9), die die haftschlüssig zu verbindenden Objekte verbindet, als Teststücke (13) ausgeschnitten und einem Verbindungsbiegetest unterzogen werden, wobei der Biege-Elastizitätsmodul beim Verbindungsbiegetest und der Elastizitätsmodul bei Druck in Dickenrichtung der Haftmaterialschicht ein Verhältnis von 0,8 bis 20 aufweisen.

13. Verfahren zum Herstellen einer Haftmaterialzusammensetzung, wobei dieses die Schritte des Mischens und Knetens eines Materials mit plattenartigen Teilchen, nicht-plattenartigen Teilchen A mit einem mittleren Teilchendurchmesser von 10 $\mu$m oder mehr, nicht-plattenartigen Teilchen B mit einem mittleren Teilchendurchmesser von weniger als 10 $\mu$m und einem anorganischen Haftmittel als Hauptkomponente in einen pastenähnlichen Zustand umfasst, wobei der Anteil der nicht-plattenartigen Partikel B 10 bis 35 Masse-% der Hauptkomponenten insgesamt beträgt; und worin der Anteil der plattenartigen Teilchen 5 bis 35 Masse-% der Hauptkomponenten insgesamt beträgt.

14. Verfahren zum Herstellen eines verbundenen Artikels, wobei dieses die Schritte des einstückigen Verbindens von zwei oder mehreren haftschlüssig zu verbindenden Objekten durch Verwendung der Haftmaterialzusammensetzung nach einem der Ansprüche 1 bis 7 umfasst.

**Revendications**

1. Composition de matériau liant pour obtenir un article lié dans lequel deux objets ou plus devant être liés sont intégralement liés via des couches de matériau liant (9), la composition de matériau liant comprenant des particules lamellaires, des particules non lamellaires et un adhésif inorganique à titre de composants principaux, dans laquelle les particules non lamellaires sont constituées de particules non lamellaires A ayant une granulométrie moyenne de 10 $\mu$m ou plus et de particules non lamellaires B ayant une granulométrie moyenne inférieure à 10 $\mu$m, la proportion des particules non lamellaires B étant de 10 à 35 % en masse des composants principaux totaux ; dans laquelle la proportion des particules lamellaires est de 5 à 35 % en masse des composants principaux totaux.

2. Composition de matériau liant selon la revendication 1, dans laquelle la proportion totale des particules lamellaires et des particules non lamellaires A est de 40 à 65 % en masse des composants principaux totaux.

3. Composition de matériau liant selon la revendication 1 ou la revendication 2, dans laquelle les particules lamellaires ont un rapport d'aspect de 3 ou plus.

4. Composition de matériau liant selon l'une quelconque des revendications 1 à 3, dans laquelle les particules lamellaires ont une granulométrie moyenne de 2 à 200 $\mu$m.

5. Composition de matériau liant selon l'une quelconque des revendications 1 à 4, dans laquelle les particules lamellaires sont des particules lamellaires faites d'un ou plusieurs matériaux choisis dans le groupe constitué par le mica, le talc, le nitrure de bore et les copeaux de verre.

6. Composition de matériau liant selon l'une quelconque des revendications 1 à 5, dans laquelle les particules non lamellaires sont des particules non lamellaires faites d'un ou plusieurs matériaux choisis dans le groupe constitué par l'alumine, la silice, la mullite, la zircone, le carbure de silicium, le nitrure de silicium, le nitrure d'aluminium, le nitrure de bore et le verre.

7. Composition de matériau liant selon l'une quelconque des revendications 1 à 6, dans laquelle les objets devant être liés sont des segments de nid d'abeilles (2).

**8.** Article lié dans lequel deux objets ou plus devant être liés sont liés intégralement via des couches de matériau liant (9) formées de la composition de matériau liant selon l'une quelconque des revendications 1 à 7, dans lequel les couches de matériau liant (9) ont une porosité de 40 à 80 %, et les couches de matériau liant (9) ont un diamètre de pore moyen de 20 à 200 $\mu$m.

**9.** Article lié selon la revendication 8, dans lequel la proportion en volume des pores ayant des diamètres de pores de 20 à 200 $\mu$m parmi tous les pores des couches de matériau liant est située dans la plage de 30 % en volume ou plus.

**10.** Article lié selon la revendication 8 ou 9, dans lequel, quand un objet devant être lié A et un objet devant être lié B sont liés via la couche de matériau liant (9) ayant une épaisseur t, la couche de matériau liant (9) contient une couche de matériau liant I d'une portion ayant une épaisseur de 0,25t à partir d'une interface entre l'objet devant être lié A et la couche de matériau liant, une couche de matériau liant III d'une portion ayant une épaisseur de 0,25t à partir d'une interface entre l'objet devant être lié B et la couche de matériau liant et une couche de matériau liant II d'une portion ayant une épaisseur de 0,5t entre la couche de matériau liant I et la couche de matériau liant III, et une porosité moyenne $\varepsilon_1$ des couches de matériau liant I et III et une porosité $\varepsilon_2$ de la couche de matériau liant II satisfont à la formule relationnelle $0,8 < \varepsilon_2/\varepsilon_1 < 1,2$.

**11.** Article lié selon l'une quelconque des revendications 8 à 10, dans lequel le module en compression de Young dans la direction de l'épaisseur de la couche de matériau liant (9) est de 20 % ou moins du module de Young de l'objet devant être lié (11).

**12.** Article lié selon l'une quelconque des revendications 8 à 11, dans lequel, quand deux objets devant être liés et la couche de matériau liant (9) qui joint les objets devant être liés sont découpés sous la forme d'une éprouvette (13) et soumis à un test de flexion à l'état collé, le module en flexion de Young dans le test de flexion à l'état collé et le module en compression de Young dans la direction de l'épaisseur de la couche de matériau liant ont un rapport de 0,8 à 20.

**13.** Procédé de fabrication d'une composition de matériau liant, comprenant les étapes consistant à mélanger et malaxer, dans un état analogue à une pâte, un matériau contenant des particules lamellaires, des particules non lamellaires A ayant une granulométrie moyenne de 10 $\mu$m ou plus, des particules non lamellaires B ayant une granulométrie moyenne inférieure à 10 $\mu$m et un adhésif inorganique à titre de composants principaux, la proportion des particules non lamellaires B étant de 10 à 35 % en masse des composants principaux totaux ;
dans lequel la proportion des particules lamellaires est de 5 à 35 % en masse des composants principaux totaux.

**14.** Procédé de fabrication d'un article lié, comprenant les étapes consistant à lier intégralement deux objets ou plus par utilisation de la composition de matériau liant selon l'une quelconque des revendications 1 à 7.

FIG.1

FIG.2

FIG.3

FIG.4

FIG.5

FIG.6

**EP 2 123 617 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002177719 A
- JP 2001190916 A
- US 20040097370 A